# EUROPÄISCHE PATENTSCHRIFT

(11) **EP 1 668 659 B1**
(45) Veröffentlichungstag und Bekanntmachung des Hinweises auf die Patenterteilung: **31.07.2013**
(21) Anmeldenummer: 04764924.9
(22) Anmeldetag: 08.09.2004
(51) Int. Cl.: H01H 9/18

(54) **BEDIENELEMENT MIT FREI PROGRAMMIERBARER SYMBOLIK**
OPERATOR ELEMENT COMPRISING FREELY PROGRAMMABLE SYMBOLS
ELEMENT DE COMMANDE A SYMBOLE LIBREMENT PROGRAMMABLE

(30) Priorität: 12.09.2003 DE 10342142
(43) Veröffentlichungstag der Anmeldung: 14.06.2006
(73) Patentinhaber: Preh GmbH, 97616 Bad Neustadt a.d. Saale (DE)
(72) Erfinder: GUTBROD, Thomas, 97291 Thüngersheim (DE); JEITNER, Martin, 97645 Ostheim (DE); SCHELBERT, Harald, 97631 Bad Königshofen (DE)
(74) Vertreter: Bauer, Wulf
(86) Internationale Anmeldenummer: PCT/EP2004/009981
(87) Internationale Veröffentlichungsnummer: WO 2005/029523

(56) Entgegenhaltungen:
- EP-A- 0 232 137
- DE-A- 4 426 669
- US-A- 4 501 937
- US-A- 5 777 603
- US-B1- 6 310 308

## Beschreibung

### Technisches Gebiet

Zur Aktivierung von Funktionen verschiedenster Art, ist der Einsatz von Bedienelementen, wie Schaltern, oder bei einer großen Anzahl von verschiedenen Funktionen, von ganzen Schalterleisten und Tastaturen verbreitet. Dies ist vor allem dann zweckmäßig, wenn nur wenige Funktionen, welche geschaltet werden sollen, vorhanden sind, oder wenn diese unmittelbar durch einen einzigen Handgriff zu schalten sein sollen oder müssen. Dies ist z.B. bei Not - Aus Schaltern oder bei Warnblinkschaltem im Kfz der Fall. Im Gegensatz dazu wird bei einer Vielzahl von zu schaltenden Funktionen die Tastatur zunehmend unübersichtlich und teuer. In der Regel werden bei solchen Schaltelementen die Tastenkappen selbst durch ein, der hinterlegten Funktion entsprechendes Symbol oder eine Aufschrift gekennzeichnet.

### Stand der Technik

Ein gängiges Verfahren zur Beschriftung von Tastenkappen zeigt die DE 40 18 411 A1 auf.

Um das lineare Anwachsen der Tastenanzahl mit den zu betätigenden Funktionen zu vermeiden, gibt es eine Reihe von Ansätzen um eine Mehrfachbelegung von Tasten zu ermöglichen. So wurden Systeme mit einer reduzierten Tastenzahl und einer Menu-Steuerung, z.B. über einen Bildschirm entwickelt. Hierbei sind z.B. die Tasten um einen Bildschirm angeordnet. Die Funktionssymbole werden auf dem Bildschirm abgebildet und durch die entsprechende nächste Taste zu dem Symbol aktiviert.

In weiteren Lösungsansätzen werden berührungsempfindliche Bildschirme eingesetzt, um die Trennung von Funktionselement und Symbol zu vermeiden (DE 198 09 934 A1). Hierbei treten jedoch insbesondere unter ungünstigen Umgebungsbedingungen Probleme durch die Schädigung und Abnutzung der berührungsempfindlichen Fläche auf. Zudem ist durch die Verwendung eines Bildschirms die Gestaltung der Bedien- oder Tastatureinheit erheblich eingeschränkt. Dies ist vor allem ein wichtiges Kriterium in Kfz - Anwendungen, wo die Gestaltung des Fahrzeuginnenraums mit möglichst geringen Einschränkungen erfolgen soll.

Bekannt sind auch frei programmierte Bedienelemente, welche nur durch Nummern oder unspezifische Symbole gekennzeichnet sind. Diese Bedienelemente haben jedoch den Nachteil, dass sich ihre Funktion nicht aus ihrem Aussehen erschließen lässt. Auf diese Weise lassen sich daher nur einige wenige Bedienelemente integrieren, die in der Regel vom Nutzer einmalig mit speziellen Sonderfunktionen belegt werden und dann fest einprogrammiert bleiben.

Eine weitere Lösung für die Darstellung frei programmierbarer Symbole an einem Bedienelement besteht darin, ein LCD direkt in eine Taste einzubauen und z.B. mit einem transparenten Fenster abzudecken. Dies erlaubt auf der einen Seite eine programmierbare Symbolik, auf der anderen Seite wird das Design der Taste durch das Display vorgegeben. Es finden sich hierbei Lösungsansätze, bei welchen das Display fest in der Tastenkappe verankert ist und bei der Betätigung der Taste mit bewegt wird, sowie Ansätze mit einem fest stehendem Display, wobei der optische Abstand zwischen Display und Tastenkappe in manchen Fällen durch den Einsatz von Bildleitern verkürzt wird (JP- A- 060044857 A, DE 100 08 670 C2). Die Bildleiter bestehen hierbei z.B. aus Bündeln von geordneten Glasfasern, welche verklebt oder verschmolzen sind und in die Form von geometrischen Elementen (z. B. Quader) geschnitten sind. Mit den Enden der Glasfasern auf eine Fläche aufgesetzt erzeugen sie ein Abbild der Fläche in der Bildebene, welche durch die gegenüberliegende Seite des Glasfaserbündels gegeben ist. Auch mit Hilfe solcher Bildleiter kann die Bildinformation nicht direkt in die Tastenkappe gebracht werden, da zwischen beweglicher Tastenkappe und Bildleiter ein Luftspalt verbleiben muss um die Bewegung der Tastenkappe bei Betätigung zu ermöglichen. Nachteilig ist, dass die Tasten aufgrund der Verwendung von zwangsweise ebenen Tastenkappen und dem direkten Blick auf das Display sehr klobig wirken und sich nicht an ein spezielles Design anpassen lassen. Kleine Tasten, deren Oberfläche nur unwesentlich größer als die aktive Fläche ist, sind nicht realisierbar, da aufgrund der erforderlichen Fläche für Anschlüsse und Leiterbahnen auf dem Glas die Glasfläche in der Regel deutlich größer als die aktive Fläche des Displays ist. Daher sind derartige Taten vor allem in industriellen Anwendungen zu finden, jedoch nicht im Kfz - Innenraum, wo gerade das Design eine hervorgehobene Rolle spielt.

Weiterhin bekannt ist aus der DE 198 49 973 A1 eine Anzeigevorrichtung, mit einer steuerbaren Streuscheibe, welche von einer Steuereinrichtung gemäß den darzustellenden Informationen angesteuert wird.

DE 44 26 669 A offenbart ein Bedienelement mit einem austenerbaren Display zur Erzeugung eines Bildes einer frei programmierbaren Symbolik gemäß dem Oberbegriff des Auspruchs 1.

### Darstellung der Erfindung

Aufgabe der Erfindung ist es, ein Bedienelement aufzuzeigen, welche eine veränderbare Symbolik aufweist und somit stets das der Funktionalität entsprechende Symbol oder Schriftzeichen (Piktogramm) angezeigt wird.

Gelöst wird die Aufgabe durch die Merkmale des Patentanspruchs 1.
Der Erfindung liegt die Idee zugrunde, das Bild der darzustellenden Symbolik durch ein Display, wie z.B. ein LCD, zu erzeugen und in die Innenseite eines Bedienelements, beispielsweise in das Knopfoberteil oder in eine Tastenkappe direkt zu projizieren. Um die Größe und Form der Taste nicht durch das Display zu beeinflussen, wird dieses vorzugsweise im Inneren des Gehäuses des Bedienelements angebracht. Das Bild der Symbolik wird auf eine Bildebene z. B. in der Tastenkappe projiziert und damit dem Betrachter erkenntlich gemacht. Als Projektionsebene dient beispielsweise eine Streuschicht in der Tastenkappe, welche sowohl auf der Innenseite oder auf der Außenseite der Tastenkappe angebracht sein kann, das Material der Tastenkappe selbst, oder ein beliebiges anderes Verfahren, welches es erlaubt, ein Zwischenbild in der Tastenkappe zu erzeugen.
Für eine gleichmäßige Ablesbarkeit der Tastensymbolik ist eine möglichst große Winkelverteilung erforderlich. Diese kann durch die Verteilung der Lichtquelle selbst, welche zur Hinterleuchtung des Displays eingesetzt wird, erreicht werden (eventuell mit Hilfe von optischen Elementen), oder aber durch eine lichtstreuende Schicht (Streuschicht) in der Taste. Bei Verwendung einer lichtstreuenden Schicht kann diese identisch mit der Projektionsschicht für die Zwischenbildebene oder aber durch eine zusätzliche Schicht oder eine Oberflächenstreuung realisiert sein.

Durch diesen Aufbau werden Bedienelemente geschaffen, welche eine veränderbare Symbolik durch freie Programmierbarkeit aufweisen, wozu das Display individuell angesteuert wird. Es kann auf ein zusätzliches Anzeigeelement verzichtet werden, da die Belegung der Bedienelemente selbsterklärend ist. Gleichzeitig kann die Zahl der Bedienelemente erheblich reduziert werden, da je nach Menu-Ebene die Bedienelemente unterschiedliche Funktionalität aufweisen.

Zudem erlaubt das vorgeschlagene System, speziell für den Einsatz im Kfz, die Bedienelemente dem Wunsche eines Designer entsprechend darzustellen. Die Oberfläche z.B. der Tasten kann hierbei dem Design des Fahrzeuginnenraums entsprechend genarbt und gekrümmt sein. Zudem ist die erforderliche Größe der Tastenkappe im wesentlichen durch die maximal darstellbare Symbolgröße vorgegeben und nicht durch die Abmessung des bilderzeugenden Elements. Durch die Wahl eines schwarz - transparenten Materials für die Taste oder die Projektionsschicht kann ein dunkles Erscheinungsbild im Auflicht erreicht werden. Dies erlaubt es z.B. einen geringen optischen Unterschied zwischen den frei programmierbaren Tasten und Tasten in Lack- und Laser - Technik zu erreichen.

Durch die Darstellung der Symbolik auf einer Zwischenbildebene in der Taste / im Knopf werden die bilderzeugende Ebene des Displays und die Beobachtungsebene des Betrachters räumlich getrennt. Um diesen Abstand ohne Verlust an Auflösung des Displays zu überbrücken, gibt es mehrere Lösungsansätze.

### Kurze Beschreibung der Zeichnung

Anhand einiger Ausführungsbeispiele mit Zeichnung soll die Erfindung näher erläutert werden. Es zeigt
- Fig. 1: eine erste Ausführung eines Bedienelements in Schnittdarstellung,
- Fig. 2: eine zweite Ausführung des Bedienelements in Schnittdarstellung,
- Fig. 3: eine dritte Ausführung des Bedienelements in Schnittdarstellung.

### Wege zur Ausführung der Erfindung

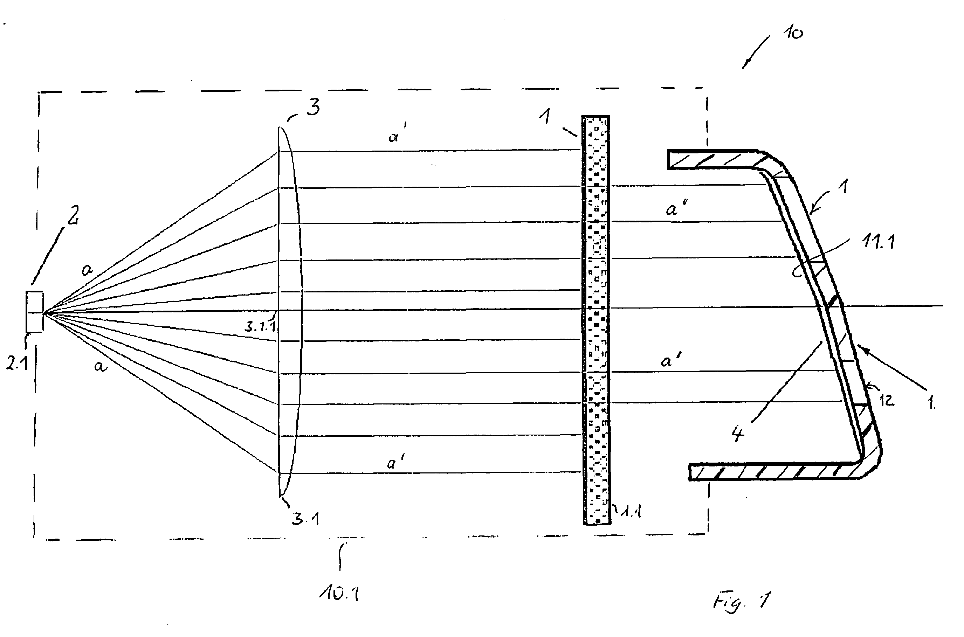

Mit 10 ist in allen Fig. 1 bis 3 ein Bedienelement, hier eine Taste mit einer Tastenkappe 11 gekennzeichnet, welcher eine Symbolik 12 von hinten hinein projiziert und damit dem Betrachter von vorne sichtbar gemacht wird.

In einer ersten Ausführung nach Fig. 1 weist das Bedienelement 10 als Hinterleuchtung für ein im hier angedeuteten Gehäuse 10.1 des Bedienelements 10 eingebundenes Display 1 eine Lichtquelle 2, hier eine näherungsweise punktförmige Lichtquelle 2.1, auf, welche z.B. durch einen LED Chip dargestellt werden kann. Mit Hilfe eines vor der Lichtquelle 2.1 befindliches optischen Systems 3 wird ein paralleles Lichtbündel a' aus dem emittierten Licht a der Lichtquelle 2.1 erzeugt. Dies kann z.B. mit Hilfe einer Linse 3.1, in deren Brennpunkt 3.1.1 die Lichtquelle 2.1 positioniert wird, geschehen, oder mit einem nicht näher dargestellten Reflektor, welcher in der Art geformt ist, dass das austretende Licht parallel gebündelt ist. Zur Erreichung der parallelen Abstrahlung können zudem Elemente aus Linsen 3.1 , Reflektoren und Blenden kombiniert werden.

Alternativ besteht die Möglichkeit, die optischen Elemente 3 ganz oder teilweise in die Lichtquelle 2.1 zu integrierten, z.B. in Form von Lichtquellen mit eingebautem Reflektor oder LEDs mit Linse.
Die Lichtquelle 2.1 mit den zugehörigen optischen Elementen 3 ist hinter das Display 1 positioniert, bei welchem es sich z.B. um ein transmissives LCD 1.1 handelt. Das Display 1.1 wirkt hier als Transmissionsfilter, welches nur im Bereich der in die Tastenkappe 11 zu projizierende (gewünschten) Symbolik 12 Licht a" durchlässt, in anderen Bereichen hingegen das Licht absorbiert. Durch die parallele Hinterleuchtung kann durch Anbringen einer Streuschicht 4 in beliebiger Entfernung vor dem Display 1 ein reales Zwischenbild erzeugt werden.

In der Anwendung ist häufig ein exakt paralleles Lichtbündel a' nicht realisierbar. Daher wird die Auflösung der Symbolik 12 mit zunehmendem Abstand zwischen Display 1 und Zwischenbildebene im Bedienelement 10 abnehmen. Der maximal zulässige Abstand zwischen Tasteninnenseite 11.1 und Display 1 ist daher durch die Auflösung des Displays 1, die erforderliche Auflösung des dargestellten Symbols 12 und die verbleibende Divergenz des Lichtbündels a" gegeben.
Im Falle einer einfachen Linse 3.1 nach Fig. 1 ergibt sich die Divergenz des Lichts mittels einfacher geometrischer Überlegungen aus der Größe der Lichtquelle 2.1 und der Brennweite der Linse 3.1. Eine Reduzierung der Divergenz und damit der Strahlaufweitung zwischen Display 1 und Tastenkappe 11 kann durch den Einsatz eines transparenten Lichtsteins (hier nicht näher dargestelit) mit möglichst hohem Brechungsindex erreicht werden.

Da in dem vorgesehenen Aufbau das gesamte Licht a" parallel auf die Tasteninnenseite 11.1 trifft, ist eine sehr gut streuende Schicht 4 in der Tastenkappe 11 vorgesehen, um eine homogene Lichtverteilung der Abstrahlung auf der Tastenkappe 11 zu erreichen. Andererseits ist es jedoch auch möglich, z.B. durch Einsatz einer speziellen Folie zur Lichtablenkung, das gesamte Licht in einen kleinen Raumwinkelbereich, wie dem Blickwinkelbereich des Fahrers eines Kfz, abzulenken.

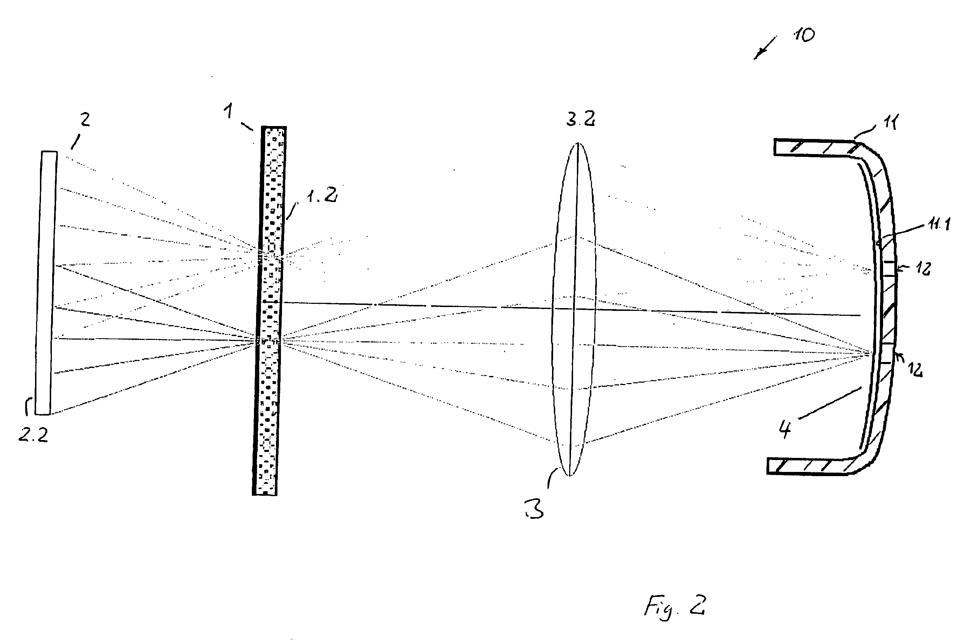

In einer weiteren bevorzugten Ausführung nach Fig. 2 wird ein reales Bild des Displays 1 mit Hilfe einer Linsenoptik 3.2 in die Tastenkappe 11 projiziert. Hierzu befindet sich mindestens eine Linse 3.2 zwischen Display 1 und Tastenkappe 11. Der Abstand der realen Zwischenbildebene in der Tastenkappe 11 und dem Display 1 beträgt mindestens die vierfache Brennweite dieser Linse 3.2. In dieser Ausführung sind Display 1 , Linse 3.2 und Tastenkappe 11 so angeordnet, dass gerade eine Abbildung der Bildebene des Displays 1 auf der Streuschicht 4 in der Tastenkappe 11 erreicht wird.

Wahlweise kann auch ein optischer Aufbau mit z.B. mehr als einer Linse 3.2 gewählt werden, um die Abbildung zu verbessern, oder höhere Lichtstärken auf der Tastenkappe 11 zu erreichen. Die Divergenz des Lichts in der bilderzeugenden Ebene spielt hierdurch keine Rolle mehr für die Auflösung, welche auf der Tastenkappe 11 erreicht werden kann. Dies erlaubt es, großflächige Lichtquellen 2.2 einzusetzen, oder aber selbstleuchtende Displays 1.2 zu verwenden um das Symbol 12 zu erzeugen.

Allerdings kann für ein transmissives Display 1.1 auch ein Aufbau ähnlich wie der in Fig.1 verwendet werden, um eine geringere Divergenz des Lichtes zu erzeugen. Hierdurch wird erreicht, dass alles Licht a', welches durch das Display 1.1 tritt, auch auf die Abbildungslinse 3.2 trifft und auf die Zwischenbildebene (Streuschicht 4) der Tastenkappe 11 fokussiert wird.

Durch den optischen Aufbau nach Fig.2 kann auch eine vergrößernde oder verkleinernde Abbildung in der Tastenkappe 11 realisiert werden. Dies erlaubt es, z.B. mit sehr kleinen hochauflösenden Displays zu arbeiten, oder aber größere Displays mit geringerer Auflösung zu verwenden und die gewünschte Auflösung auf der Tastenkappe 11 über eine verkleinernde Abbildung zu erzielen.

Aufgrund des erheblichen Abstands zwischen Tastenkappe 11 und Display 1 erlaubt dieser Aufbau auch die Lichtquelle 2 zwischen Tastenkappe 11 und Display 1 zu positionieren und ein reflektives Display zu benutzen (nicht näher dargestellt). Dies ermöglicht, die besonderen Eigenschaften von reflektiven Displays, wie z.B. sehr hohen Kontrast zu nutzen. Als reflektive Displays können auch Module aus Mikrospiegeln eingesetzt werden, wobei das Umschalten eines Bildpunkts zwischen aktiven und passiven Zustand durch kippen des zugehörigen Spiegels realisiert wird.

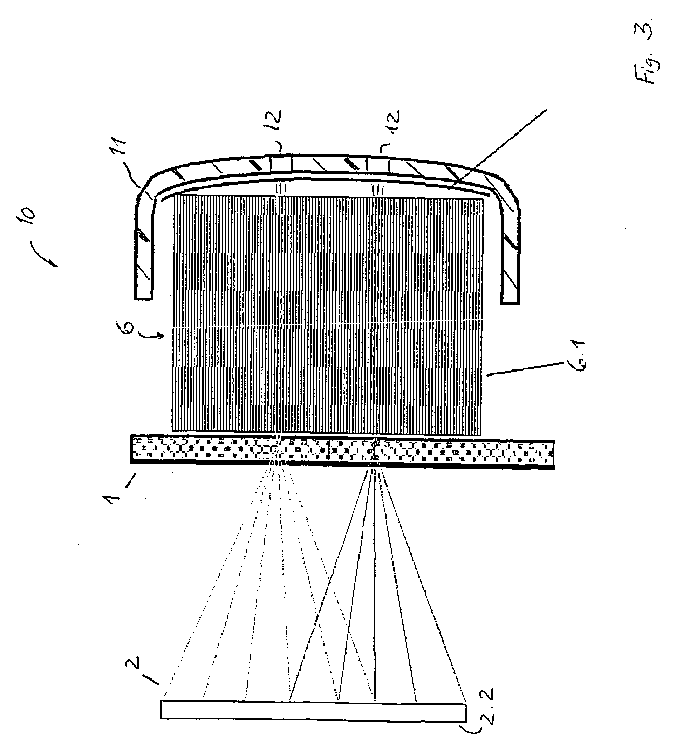

In einer dritten bevorzugten Ausführungsform nach Fig. 3 wird das Bild des Displays 1 unter Verwendung von faseroptischen Bildleitern 6 zwischen der bilderzeugenden Ebene des Displays 1 und der Zwischenbildebene 4 in der Tastenkappe 11 übertragen. Die faseroptischen Bildleiter 6 bestehen hierbei aus geordneten Bündeln von Lichtleitfasern aus Glas oder Kunststoff, welche eine punktgenaue Bildübertragung zwischen beiden Enden gewährleisten. Die faseroptische Bildleiter 6 können hierbei in Form von Bildstäben 6.1 , bei welchen die Einzelfasern fest verbunden sind, oder aber auch in Form von flexiblen Faserbündeln, bei welchen nur die Enden fixiert sind, eingesetzt werden.

Um die Beweglichkeit der Taste 10 für einen Tastenhub zu ermöglichen, kann bei Verwendung beispielsweise des Bildleiters 6 nach Fig. 3 ein Abstand vorgesehen werden. Dieser kann dadurch geschehen, dass der Bildleiter 6 auf der Streuschicht 4 der Zwischenbildebene oder der Tasteninnenseite 11.1 aufsitzt und mitbewegt wird. In diesem Fall muss ein Abstand zwischen feststehender bilderzeugender Ebene und bewegtem Bildleiter 6 vorgesehen werden, um die Tastenbewegung zu erlauben. Alternativ kann der Bildleiter 6 feststehend direkt auf das Display 1 aufgesetzt werden. In diesem Fall wird der Abstand zwischen Tasteninnenseite 11.1 und Bildleiteroberfläche eingehalten. Durch den Spalt zwischen Bildleiter 6 und Tasteninnenseite 11.1 , oder zwischen Display 1 und Bildleiter 6 kann es zu einer Verschlechterung der Auflösung in der Zwischenbildebene der Abbildung durch die Divergenz des Lichtes kommen. In diesem Fall hat es sich als besonders sinnvoll erwiesen, ein transmissives Display 1 zu benutzen, welches mit möglichst parallelem Licht hinterleuchtet wird, ähnlich wie in der ersten bevorzugten Ausführung nach Fig.1 .
Der Aufbau kann jedoch auch ohne Abstand zwischen Tasteninnenseite 11.1 , Bildleiter 6 und Display 1 realisiert werden. Hierzu kann das Display 1 zusammen mit der Tastenkappe 11 und dem Bildleiter 6 bewegt werden, wobei sich der Abstand zwischen Display 1 und Lichtquelle 2 ändert, oder auch diese mitbewegt wird und der optische Aufbau nicht durch die Bewegung der Taste beeinflußt wird.
Der Tastenhub kann jedoch auch bei feststehendem Display 1 unter Verwendung eines flexiblen Faserbündels (nicht näher dargestellt) ohne Abstand zwischen Tasteninnenseite 11.1, Bildbündel 6 und Display 1 ausgeglichen werden, wenn das Faserbündel so eingebaut wird, dass dieses durch seine Bewegung die Abstandsänderung zwischen Tastenkappe 10.1.1 und Display 1 während der Betätigung der Taste ausgleichen kann.
Wird der optische Aufbau ohne Abstand zwischen Tasteninnenseite 11.1 , Bildleiter 6 und Display 1 realisiert, so kann wiederum ein transmissives Display 1.1 mit diffuser oder großflächiger Beleuchtung eingesetzt werden, oder aber ein selbstleuchtendes Display 1.2 .

Es versteht sich, dass der vorgeschlagene Aufbau auch auf ein Bedienelement mit Drehknopf etc. übertragen werden kann, wobei ein Tastenhub nur dann berücksichtigt wird, wenn es sich um einen Dreh- / Druckschalter etc. handelt.

## Patentansprüche

1. Bedienelement (10), umfassend eine Lichtquelle (2, 2.1, 2.2) und ein ansteuerbares Display (1, 1.1, 1.2) zur Erzeugung eines Bildes einer frei programmierbaren Symbolik (12), ein Gehäuse (10.1) und ein Knopfoberteil und/oder eine Tastenkappe (11), wobei das Display (1, 1.1, 1.2) beabstandet vom Knopfoberteil und/oder der Tastenkappe (11) im Gehäuse (10.1) angeordnet ist, **dadurch gekennzeichnet dass** das Bild auf eine Projektionsebene im Bedienelement (10) direkt ins Knopfoberteil und/oder die Tastenkappe (11) von hinten projiziert wird und eine Streuschicht (4) zur Bildung der Projektionsebene im Knopfoberteil und/oder in der Tastenkappe (11) eingebunden ist, welche auf der Innenseite oder auf der Außenseite im Knopfoberteil und/oder in der Tastenkappe (11) angebracht ist.

2. Bedienelement nach Anspruch 1, **dadurch gekennzeichnet, dass** die Lichtquelle (2, 2.1, 2.2) zur Hinterleuchtung des Displays (1, 1.1, 1.2) eingesetzt wird.

3. Bedienelement nach Anspruch 1 oder 2, **dadurch gekennzeichnet, dass** die Lichtquelle (2) zwischen dem Display (1) und dem Knopfoberteil und/oder der Tastenkappe (11) positioniert ist.

4. Bedienelement nach Anspruch 1, 2 oder 3, **dadurch gekennzeichnet, dass** zwischen der Lichtquelle (2, 2.1, 2.2) und dem Display (1, 1.1, 1.2) und/oder zwischen dem Display (1, 1.1, 1.2) und dem Knopfoberteil und/oder der Tastenkappe (11) wenigstens ein optisches Element (3, 3.1, 3.2) eingebunden ist.

5. Bedienelement nach Anspruch 4, **dadurch gekennzeichnet, dass** das optische Element (3, 3.1) ganz oder teilweise in der Lichtquelle (2) integriert ist.

6. Bedienelement nach einem der Ansprüche 1 bis 5, **dadurch gekennzeichnet, dass** die Lichtquelle (2, 2.1, 2.2) punktförmig oder großflächig ist.

7. Bedienelement nach einem der Ansprüche 1 bis 2, **dadurch gekennzeichnet, dass** zwischen dem Display (1, 1.1, 1.2) und dem Knopfoberteil und/oder der Tastenkappe (11) ein faseroptischer Bildleiter (6) angebracht ist.

8. Bedienelement nach Anspruch 7, **dadurch gekennzeichnet, dass** der Bildleiter (6) aus geordneten Bündeln von Lichtleitfasern aus Glas oder Kunststoff in Form von Bildstäben (6.1) besteht.

9. Bedienelement nach Anspruch 7, **dadurch gekennzeichnet, dass** der Bildleiter (6) ein flexibles Faserbündel ist.

10. Bedienelement nach einem der vorgenannten Ansprüche, **dadurch gekennzeichnet, dass** das Display (1,1. 1,1. 2) ein transmissives, ein reflektierendes oder selbstleuchtendes LCD ist.

## Claims

1. A control element (10), comprising a light source (2, 2.1, 2.2) and a controllable display (1, 1.1, 1.2) for generating an image of a freely programmable symbol (12), a housing (10.1) and a button top and/or a key cap (11), the display (1, 1.1, 1.2) being disposed in the housing (10.1) spaced from the button top and/or the key cap (11), **characterised in that** the image is projected from behind onto a projection plane in the control element (10) directly into the button top and/or the key cap (11), and a scattering layer (4) for forming the projection plane, which is attached on the inside or on the outside in the button top and/or in the key cap (11), is integrated into the button top and/or key cap (11).

2. The control element according to claim 1, **characterised in that** the light source (2, 2.1, 2.2) is used for backlighting the display (1, 1.1, 1.2).

3. The control element according to claim 1 or 2, **characterised in that** the light source (2) is positioned between the display (1) and the button top and/or the key cap (11).

4. The control element according to claim 1, 2 or 3, **characterised in that** at least one optical element (3, 3.1, 3.2) is integrated between the light source (2, 2.1, 2.2) and the display (1, 1.1, 1.2) and/or between the display (1, 1.1, 1.2) and the button top and/or the key cap (11).

5. The control element according to claim 4, **characterised in that** the optical element (3, 3.1) is wholly or partially integrated into the light source (2).

6. The control element according to any one of the claims 1 to 5, **characterised in that** the light source (2, 2.1, 2.2) is point-shaped or expensive.

7. The control element according to any one of the claims 1 to 2, **characterised in that** a fibre-optic image guide (6) is mounted between the display (1, 1.1, 1.2) and the button top and/or the key cap (11).

8. The control element according to claim 7, **characterised in that** the image guide (6) consists of ordered bundles of light-guiding fibres of glass or plastic in the form of image bars (6.1.).

9. The control element according to claim 7, **characterised in that** the image guide (6) is a flexible fibre bundle.

10. The control element according to any one of the preceding claims, **characterised in that** the display (1, 1.1, 1.2) is a transmissive, reflecting or self-lighting LCD.

## Revendications

1. Elément de commande (10), comprenant une source de lumière (2, 2.1, 2.2) et un écran de visualisation apte à être commandé (1, 1.1, 1.2) pour générer une image d'une symbolique (12) librement programmable, un boîtier (10.1) et une partie supérieure de bouton et/ou un capuchon de touche (11), ledit écran de visualisation (1, 1.1, 1.2) étant disposé à distance de ladite partie supérieure de bouton et/ou du capuchon de touche (11) dans le boîtier (10.1), **caractérisé par le fait que** ladite image est projetée de derrière sur un plan de projection à l'intérieur de l'élément de commande (10), directement dans ladite partie supérieure de bouton et/ou ledit capuchon de touche (11) et qu'une couche de diffusion (4) pour la formation du plan de projection est intégrée à la partie supérieure de bouton et/ou au capuchon de touche (11), laquelle est disposée sur la face intérieure ou sur la face extérieure dans la partie supérieure de bouton et/ou dans le capuchon de touche (11).

2. Elément de commande selon la revendication 1, **caractérisé par le fait que** ladite source de lumière (2, 2.1, 2.2) est utilisée pour éclairer de derrière ledit écran de visualisation (1, 1. 1, 1.2).

3. Elément de commande selon la revendication 1 ou 2, **caractérisé par le fait que** ladite source de lumière (2) est positionnée entre ledit écran de visualisation (1) et la partie supérieure de bouton et/ou le capuchon de touche (11).

4. Elément de commande selon la revendication 1, 2 ou 3, **caractérisé par le fait qu'**un élément optique (3, 3.1, 3.2) au moins est interposé entre la source de lumière (2, 2.1, 2.2) et ledit écran de visualisation (1, 1.1, 1.2) et/ou entre ledit écran de visualisation (1, 1.1., 1.2) et ladite partie supérieure de bouton et/ou le capuchon de touche (11).

5. Elément de commande selon la revendication 4, **caractérisé par le fait que** ledit élément optique (3, 3.1) est intégré complètement ou en partie à la source de lumière (2).

6. Elément de commande selon l'une quelconque des revendications 1 à 5, **caractérisé par le fait que** la source de lumière (2, 2.1, 2.2) est en forme de point ou à grande surface.

7. Elément de commande selon l'une quelconque des revendications 1 à 2, **caractérisé par le fait qu'**un guide d'image à fibre optique (6) est disposé entre ledit écran de visualisation (1, 1.1, 1.2) et la partie supérieure de bouton et/ou le capuchon de touche (11).

8. Elément de commande selon la revendication 7, **caractérisé par le fait que** ledit guide d'image (6) se compose de faisceaux ordonnés de fibres optiques en verre ou en matière plastique, sous forme de baguettes d'image (6.1)

9. Elément de commande selon la revendication 7, **caractérisé par le fait que** ledit guide d'image (6) est un faisceau flexible de fibres.

10. Elément de commande selon l'une quelconque des revendications précédentes, **caractérisé par le fait que** ledit écran de visualisation (1, 1.1, 1.2) et un écran LCD transmissif, réfléchissant ou auto-lumineux.
